# EUROPÄISCHE PATENTANMELDUNG

(11) **EP 4 345 546 A1**
(43) Veröffentlichungstag der Anmeldung: **03.04.2024**
(21) Anmeldenummer: 22199118.5
(22) Anmeldetag: 30.09.2022
(51) Int. Cl.: G05B 17/00, G05B 17/02, G05B 23/02, G06F 21/50

(54) **VERFAHREN, VORRICHTUNG ZUR DATENVERARBEITUNG UND COMPUTERPRO-GRAMM ZUR OPTIMIERUNG EINES GESAMTZUSTANDS EINES CYBER-PHYSISCHEN SYSTEMS**

(71) Anmelder: Siemens AG Österreich, 1210 Wien (AT)
(72) Erfinder: Bittner, Matthias, 3820 Raabs an der Thaya (AT); Hauer, Daniel, 3400 Klosterneuburg (AT); Kintzler, Florian, 1140 Wien (AT)
(74) Vertreter: Siemens Patent Attorneys

(57) **Zusammenfassung**

Der vorliegenden Erfindung liegt die Aufgabe zugrunde, ein Verfahren zur Optimierung des Gesamtzustands eines cyper-physischen Systems (CPS) bereitzustellen, ohne dass zuvor die exakte Auswirkung von denen das CPS beeinflussenden Parametern bekannt sein müssen.

Diese Aufgabe wird erfindungsgemäss gelöst durch ein Verfahren zur Optimierung eines Gesamtzustands eines cyber-physischen Systems, wobei Systemzustände des CPS mit Messdaten abbildbar und über Parameter beeinflussbar sind, umfassend die Verfahrensschritte:
a) für mehr als einen Systemzustand Erfassen von Messdaten des cyber-physischen Systems;
b) Auswählen von einem oder mehreren Klassifikatoren;
c) Klassifizierung der Systemzustände basierend auf den erfassten Messdaten in Klassen durch den oder die Klassifikatoren;
d) für den Gesamtzustand Ermitteln von mindestens einem Key-Performance-Indikator (KPI);
e) für mindestens einen erfassten Systemzustand, Variieren von mindestens einem Parameter und Simulieren von Messdaten ausgehend von diesem Systemzustand mit diesem variierten Parameter;
f) erneute Durchführung der Verfahrensschritte c) bis e) mit den simulierten Messdaten so lange bis die mit dem variierten Parameter erhaltenen Key-Performance-Indikatoren des Gesamtzustands zufriedenstellend sind.

## Beschreibung

Die vorliegende Erfindung betrifft ein Verfahren, eine Vorrichtung zur Datenverarbeitung und ein Computerprogramm zur Optimierung eines Gesamtzustands eines cyber-physischen System

Heutzutage werden in vielen Bereichen (Energiebereich - Smart Grid Stromnetze, Wasserversorgung, Gebäudetechnik - Smart Buildings, Smart Cities, Produktionsanlagen im Fertigungs- und Automatisierungsbereich, ...) so genannte cyber-physische bzw. cyber-physikalische Systeme (CPS) eingesetzt. CPS bezeichnen dabei üblicherweise eine Kopplung von Systemkomponenten eines physischen Systems mit einer Datenverarbeitungsinfrastruktur bzw. einem Kommunikationsnetz (z.B. Access Points, Router, Switches, drahtgebundene und/oder draht-lose Kommunikationsverbindungen), über welches das CPS überwacht, geregelt und gesteuert wird. CPS sind typischerweise sehr komplexe, dynamische und heterogene Systeme. Versucht man die miteinander agierenden Systemkomponenten zu beschreiben, dann wird man hauptsächlich auf physikalische und digitale (Informations- und Kommunikationstechnik, IKT) Komponenten stoßen. Diese Systemkomponenten stehen in ständiger Interaktion miteinander. Das Hauptziel dieses bidirektionalen Austausches an Information ist es, ein optimales, energieeffizientes, stabiles und flexibles Verhalten zu erzeugen.

Um solch ein komplexes CPS wie ein Stromnetz nun in dem jeweils gewünschten und optimalen Zustand betreiben zu können, muss eine Vielzahl an das CPS beeinflussenden Parametern (Batteriegröße, Ausrichtung und Größe einer Photovoltaik-Anlage, Anschlusspunkte von Verbrauchern, Kontrollalgorithmen und ihre Parameter, Anzahl von Ladesäulen und deren Verhalten etc.) definiert und gewählt werden. Jedoch setzt die Wahl optimaler Parameter in solch einem komplexen System zum einen voraus, dass man den gewünschten Systemzustand genau beschreiben kann und zum anderen auch eine genaue Kenntnis über sämtliche Parameter-Zusammenhänge hat.

Derzeit existierende Ansätze verfolgen den Ansatz, das zu optimierende komplexe CPS in einem oder mehreren Modellen exakt abzubilden und zu versuchen, mit Hilfe von Simulationen, Optimierungsproblem-Lösungsalgorithmen und modellbasiertem Lernen ein optimales Set an Parametern zu finden. Es wird versucht, das reale CPS so gut wie möglich zu duplizieren. Das Systemverhalten und die Parameterzusammenhänge werden definiert und strukturiert in einem oder mehreren Modellen zusammengefasst. Die Berechnung von Parametern, die zuvor definierte Key-Performance-Indikatoren optimieren, erfolgt dann auf Basis von Schätzungen, Erfahrung oder in vielen Fällen auch auf Basis von Zufall.

Bei einem komplexen CPS wie einem Smart Grid ist es jedoch nicht möglich alle Parameterzusammenhänge in einem Model abzubilden. Ein Smart Grid ist hochgradig heterogen, sowohl bezüglich der Einflüsse auf das System (externe Parameter, beispielsweise Wetterdaten / saisonales Verhalten - bei Kälte Heizen, bei Hitze Klimaanlage, Sonnenstrahlung beeinflusst Solarzellenertrag, Wochentag, Tageszeit, soziales Verhalten (Fußballspiel-Halbzeitpeak, Reisen, ...), unterschiedliche Erzeuger/ Verbraucher), als auch bezüglich der hohen Anzahl unterschiedlicher Systemkomponenten, deren Parameter durch Ausgestaltung der Systemkomponenten ganz oder zumindest teilweise wählbar sind (Steuerungsalgorithmen der Systemkomponenten, IOT (Internet of Things) Geräte, Batteriegröße und -anzahl, ...). Zudem sind weder alle Parameterzusammenhänge bekannt noch vollständig verstanden. Zudem sind viele Parameter auch häufig gar nicht oder nur sehr eingeschränkt von einem Systemadministrator steuerbar (Stichwort Wetter, Nutzerverhalten). Es beeinflussen so viele Parameter den Gesamtzustand des CPS, dass ein Modell des CPS zudem häufig unterbestimmt ist.

Darum benötigt es ein Konzept, das trotz fehlendem Wissen über die exakten Zusammenhänge der einzelnen Parameter dennoch möglichst optimale Lösungen für dieses komplexe CPS generieren kann.

Der vorliegenden Erfindung liegt daher die Aufgabe zugrunde, den Gesamtzustand eines cyber-physischen Systems effizient zu optimieren, ohne dass notwendigerweise alle Parameterzusammenhänge bekannt oder verstanden sein müssen. Diese Aufgabe wird durch die in den unabhängigen Ansprüchen beschriebenen Lösungen gelöst.

Die erfindungsgemäße Lösung betrifft ein Verfahren zur Optimierung eines Gesamtzustands eines cyber-physischen Systems (Cyber-Physical System, CPS), umfassend ein physisches System mit miteinander agierenden physikalischen und digitalen Systemkomponenten, insbesondere ein Smart Grid, wobei die Systemkomponenten über eine Dateninfrastruktur kommunizieren, ein Systemzustand des cyber-physischen Systems mit Messdaten abbildbar und über Parameter beeinflussbar ist und der Gesamtzustand mindestens einen Systemzustand umfasst.;

Das Verfahren umfasst die Verfahrensschritte:
a) Für mehr als einen Systemzustand Erfassen von Messdaten des cyber-physischen Systems.
b) Auswählen von einem oder mehreren Klassifikatoren
c) Klassifizierung der Systemzustände basierend auf den erfassten Messdaten in Klassen durch den oder die Klassifikatoren.
d) Für den Gesamtzustand Ermitteln von mindestens einem Key-Performance-Indikator (KPI) wobei der Key-Performance-Indikator des Gesamtzustands beeinflusst wird von
   - einem individuellen Key-Performance-Indikator eines von dem Gesamtzustand umfassten Systemzustands und/oder
   - der Klassifizierung der Klassen der Systemzustände und/oder
   - einem Labeln einer Güte des Gesamtzustands und/oder
   - einer messbaren Größe eines Systemzustands und/oder des Gesamtzustands.
e) Für mindestens einen erfassten Systemzustand, Variieren von mindestens einem Parameter und Simulieren von Messdaten ausgehend von diesem Systemzustand mit diesem variierten Parameter.
f) Erneute Durchführung der Verfahrensschritte c) bis e) mit den simulierten Messdaten so lange bis die mit dem variierten Parameter erhaltenen Key-Performance-Indikatoren des Gesamtzustands zufriedenstellend sind.

Die erfindungsgemäße Lösung betrifft zudem eine Vorrichtung zur Datenverarbeitung für eine Optimierung eines Gesamtzustands eines CPS, umfassend ein physisches System mit miteinander agierenden physikalischen und digitalen Systemkomponenten, insbesondere ein Smart Grid, wobei die Systemkomponenten über eine Dateninfrastruktur kommunizieren, ein Systemzustand des cyber-physischen Systems mit Messdaten abbildbar und über Parameter beeinflussbar ist und der Gesamtzustand mindestens einen Systemzustand umfasst. Die erfindungsgemäße Vorrichtung umfasst Mittel und ist ausgestaltet zur Durchführung des erfindungsgemäßen Verfahrens nach Anspruch 1.

Die erfindungsgemäße Lösung betrifft weiterhin ein cyber-physisches System mit miteinander agierenden physikalischen und digitalen Systemkomponenten, insbesondere ein Smart Grid, wobei die Systemkomponenten über eine Dateninfrastruktur, z.B. Internet, kommunizieren, ein Systemzustand des cyber-physischen Systems mit Messdaten abbildbar und über Parameter beeinflussbar ist und der Gesamtzustand mindestens einen Systemzustand umfasst. Das CPS umfasst eine erfindungsgemäße Vorrichtung.

Die erfindungsgemäße Lösung betrifft weiterhin ein Computerprogramm umfassend Befehle, die bei der Ausführung durch eine mit dem erfindungsgemäßen cyber-physischen System verbundene Recheneinheit diese veranlassen, das erfindungsgemäße Verfahren auszuführen.

Die Erfindung stellt so ein Verfahren, eine Vorrichtung zur Datenverarbeitung und ein Computerprogramm zur Optimierung eines Gesamtzustands eines cyber-physischen Systems mit nur geringem Rechenaufwand bereit, ohne dass exakte Parameterzusammenhänge, d.h. ohne dass ein Einfluss einzelner Parameter auf den Zustand des CPS bekannt sein muss. Es muss also keine formale Beschreibung gewünschten Gesamtzustands vorliegen. Der gewünschte Gesamtzustand des CPS dient dennoch als Basis für die Parameteroptimierung, wobei ein menschlicher Experte eine Einschätzung bzgl. des System(gesamt)zustands geben kann ohne diese qualitative Einschätzung genau quantifizieren zu müssen. Die Auswirkung einer Parameteränderung (auf zumindest auf ein Sub-system) kann analysiert werden, ohne dass in das reale CPS eingegriffen werden muss. Es kann eine Überwachung und Optimierung während des Betriebs erfolgen.

Weitere vorteilhaften Ausgestaltungen der vorliegenden Erfindung sind den Unteransprüchen zu entnehmen, deren Ausgestaltungen beliebig miteinander kombinierbar sind. Die Merkmale, die in den einzelnen Unteransprüchen teilweise zu mehreren zusammengefasst wiedergegeben sind, können jedoch zweckmäßigerweise auch einzeln betrachtet und zu sinnvollen weiteren Kombinationen zusammengefasst werden. Das CPS, das Computerprogramm und die Vorrichtung zur Datenverarbeitung weisen, soweit übertragbar, die gleichen Vorteile auf, welche bezüglich des Verfahrens aufgeführt sind. So sind Verfahrensmerkmale auch als Eigenschaft des CPS, des Computerprogramms und der Vorrichtung zur Datenverarbeitung entsprechenden gegenständlich formuliert zu sehen und umgekehrt.

Bevorzugte Ausführungsformen der Erfindung werden nachfolgend anhand der Figuren beispielsweise näher erläutert. Dabei zeigen:
- Figur 1: schematisch eine Abfolge der Verfahrensschritte;
- Figur 2: schematisch die Abfolge der Verfahrensschritte und Beeinflussungsmöglichkeiten durch einen Experten und/oder Computer.

Die Besonderheit der vorliegenden Erfindung liegt insbesondere darin, dass eine Optimierung des Gesamtzustands erfolgen kann, ohne dass ein Experte genau quantifizieren muss, weder welche spezifischen Parameterwerte noch welche spezifischen Messwerte wünschenswert/ zu vermeiden sind. Es muss zu Beginn des Optimierens noch nicht einmal festgelegt werden, welche Parameterwerte zu variieren sind. Experteninput zu unterschiedlichen Verfahrensschritten kann, muss aber nicht zwingend erfolgen. Als exemplarisches Beispiel einer CPS-Ausführungsform wird im Folgenden ein Stromnetz/ Smart-Grid herangezogen, die Erfindung ist jedoch auch auf andere Arten eines CPS anwendbar. Anstelle einer Optimierung eines Satzes an Parametern ist das Verfahren auch durchführbar, wenn nur ein einziger Parameter variiert wird. Die beispielhaften expliziten Parametervariationen sind frei kombinierbar. Bei der Variation eines Parameters und einem anschließenden Simulieren von Messdaten ausgehen von einem Systemzustand werden die übrigen, nicht variierten Parameter dieses Systemzustands als unverändert angenommen. Somit ist unter einem Variieren von einem Parameter für einen Systemzustand und einem Simulieren von Messdaten ausgehend von diesem ursprünglichen Systemzustand mit diesem variierten Parameter das Simulieren eines Systemzustands zu verstehen, bei dem für das Simulieren die nicht variierten Parameter (=die ursprünglichen Parameter dieses ursprünglichen Systemzustands) und der variierte Parameter angenommen werden. Welcher bzw. welche Parameter variiert wird, kann durch das Verfahren bestimmt werden und muss zuvor nicht bekannt sein. Sämtliche explizit genannten variierten Parameter sind nur exemplarisch anzusehen, eine andere Parameterauswahl, die keinen, einen oder mehrere der explizit genannten zu variierenden Parameter und zusätzlich weitere Parameter umfassen, sind ebenfalls möglich.

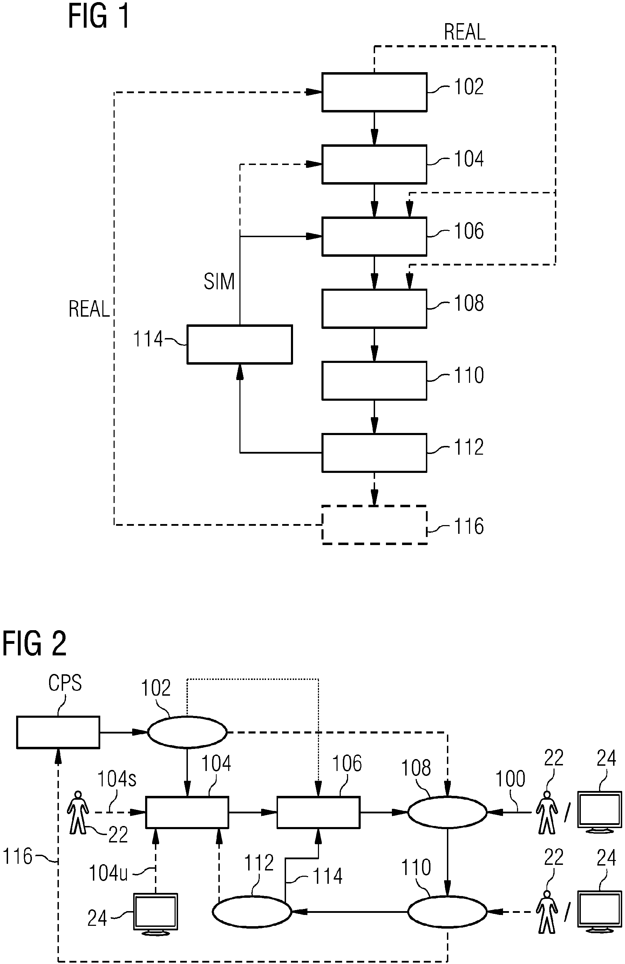

Figuren 1 und 2 zeigen schematisch eine Abfolge der Verfahrensschritte des erfindungsgemäßen Verfahrens. Figur 2 zeigt zwingende und mögliche Eingriffe durch einen Experten 22 und/oder einen Computer 24 an. Angenommen wird, dass ausreichend Messdaten von dem CPS zur Verfügung stehen und dass das System über ein bekanntes Set an Parametern modifiziert werden kann. Diese Parameter schließen sowohl statische wie auch dynamische Parameter ein. Ein Beispiel für statische Parameter ist z.B. die Kapazität einer zu installierenden Batterie. Ein Beispiel für einen dynamischen Parameter ist z.B. ein Kontrollparameter, der den Ladestrom für die Batterie im laufen Betrieb begrenzt.

Eine weitere Annahme besteht darin, dass die komplexen Parameterzusammenhänge in dem CPS nicht vollständig nachvollziehbar und als unbekannt bzw. nur teilweise bekannt vorausgesetzt werden. Das Verfahren ist jedoch auch anwendbar auf ein System mit vollständig bekannten Parameterzusammenhängen.

Ist dies erfüllt, so soll das vorgeschlagene Verfahren mittels eines Klassifikationsverfahrens und einer Simulationsumgebung ein möglichst optimales Parameterset zur Optimierung der System-KPIs berechnen. Die KPIs müssen dazu zuvor definiert worden sein.

Figuren 1 und 2 zeigen zwingende Verfahrensschritte mit einer durchgezogenen Linie an, optionale mit einer gestrichelten. Der zeitliche Ablauf kann jedoch variiert werden, so kann beispielsweise u. U. eine Auswahl des Klassifikators 104 auch vor dem Erfassen von Messwerten 102 stattfinden, wenn z.B. bekannt ist, welcher Typ von Messwerten (z.B. Texte vs. Zahlenwerte) erfasst wird oder bereits Erfahrungswerte für das CPS vorliegen. Die Messdaten werden im weiteren Verlauf für die Verfahrensschritte 104, 106 und u.U. 108 herangezogen. Die erfassten Messdaten des CPS 102 werden zunächst verwendet, um einen bzw. mehrere Zustands-Klassifikatoren zu generieren 104. Dazu können z.B. Daten von Domänen-Experten 22 analysiert und ein geeignetes Klassifikationsverfahren ausgewählt und parametrisiert werden (104s - supervised). Auch denkbar sind an dieser Stelle Algorithmen 24, die optimale Klassifikatoren auf Basis der vorhandenen Daten schätzen (104u - unsupervised). Ziel der Klassifikatoren ist hierbei, die verschiedenen möglichen (Teil-)Zustände, in welchen sich das CPS befinden kann, zu klassifizieren.

Die Information über die im System auftretenden Systemzustände (auch Zustands-Klassen genannt) wird genützt, um einen optimalen Gesamt-Systemzustand zu erreichen. Dieser erste Schritt des Generierens von Klassifikatoren für die Klassifikation verschiedener aufgetretener Systemzustände wird zu Beginn des Verfahrens ausgeführt. Diese Klassifikatoren klassifizieren dann die Systemzustände anhand der erfassten Messwerte in eine Klassifikation. Die Art und Weise wie solch ein Klassifikator aufgebaut wird hängt dabei sehr stark von den vorhandenen Messdaten ab, bezieht sich aber im Wesentlichen auf Verfahren, die auf Basis der Messdaten mithilfe von Unsupervised Clustering / Unsupervised Machine Learning Klassen mit ähnlichem Systemverhalten extrahiert. Die durch die Klassifizierung erfolgte Einteilung in Klassen 106 ist jedoch zunächst nicht mit einer Bewertung verknüpft, sondern einzig eine Gruppierung von Systemzuständen, in denen der Klassifikator eine oder mehrere Gemeinsamkeiten gefunden hat. Die Klassifizierung 106 verwendet die im Schritt 102 ermittelten Messdaten, die auch für das Auswählen des Klassifikators, Schritt 104, verwendet werden können. Das Auswählen des Klassifikators 104 kann im laufenden Betrieb anhand der im Schritt 102 erfassten Messdaten erfolgen, oder zuvor erfolgt sein, z.B. anhand weiterer, historischer Mess- oder Trainingsdaten.

Diese Optionen sind in den Figuren 1 und 2 mit gestrichelten bzw. durchgezogenen Pfeilen angedeutet: wenn der bereits ausgewählte Klassifikator verwendet wird, wird direkt die Klassifizierung 106 durchgeführt (gestrichelter Pfeil zwischen 102 und 106). Falls ein neuer Klassifikator ausgewählt wird, wird erst noch der Schritt 104 und im Anschluss der Schritt 106 mit diesem neuen Klassifikator durchgeführt (durchgezogene Pfeile zwischen 102, 104, 106).

Bei einem überwachten (supervised) Auswählen des oder der Klassifikatoren 104s bestimmt der Experte 22, welche Rohdaten der Klassifikator klassifizieren soll (z.B. analysiere Stromspitzen, ...). Bei einem nicht überwachten (unsupervised) Ansatz 104u findet der Computer 22 (je nach Datentyp und/oder zur Verfügung stehenden Rechenkapazität einfacher Algorithmus und/oder komplexerer Artificial Intelligence Ansatz, z.B. Machine learning) ohne Experteninput Gemeinsamkeiten, ohne dass zuvor bekannt ist, nach welchen Gemeinsamkeiten gesucht werden soll, maximal mit allfälligen Input zu den Datentypen (z.B. Algorithmus A eignet sich gut für die Analyse von Zeitreihen, Algorithmus B für Textdaten, ...). Dies erlaubt im weiteren Verlauf das vorurteilsfreie Entdecken von zuvor unbekannten, teils überraschenden Parameterzusammenhängen.

Diese Klassen können danach in einer KPI-Analyse 108 von Domain-Experten 22 analysiert und entsprechend ihrem Verhalten als optimale, suboptimale und nicht erwünschte Systemzustände gekennzeichnet/bewertet/gelabelt werden 100. Diese Bewertung kann als qualitativer Key-Performance-Indikator (KPI) angesehen werden, so dass die Klassifizierung der Systemzustände den KPI des Gesamtzustands beeinflusst. In den KPI des Gesamtzustands können zusätzlich auch individuelle Messwerte einfließen, ohne dass diese Messwerte notwendigerweise zuvor klassifiziert worden sind (gestrichelte Linie zwischen 102 und 108 in Figur 2). So kann ein KPI des Gesamtzustands auch mehrere qualitative und/oder quantitative, im Sprachgebrauch gemeinhin auch schon als KPI bezeichnete Bewertungen umfassen, z.B. die Gesamtkosten und eine Kundenzufriedenheit. Die Bewertung der Systemzustände allgemein ist u.U. gar nicht richtig aus den Messdaten ablesbar (z.B. muss an einem Tag mit sehr vielen Stromspitzen sehr viel Geld an den Stromanbieter gezahlt werden, wobei diese Rechnung nicht direkt gestellt wird und somit nicht in den Messdaten sichtbar, der Experte 22 hingegen weiss, dass Stromspitzen teuer und somit unerwünscht sind).

Der Domäne-Experte 22 agiert in diesem Schritt als Supervisor und versucht durch seine Bewertung im laufenden Betrieb und bei Bedarf den Klassifikator anzupassen und zu optimieren. Dieser Schritt kann z.B. auch von Algorithmen übernommen werden, die z.B. die Zustands-Klassen gemäß der darauffolgenden Regelungseingriffe oder auf Basis von Kundenfeedback kennzeichnen (labeln) bzw. bewerten.

Ein beispielhaftes Klassifikationsverfahren ist eine Klassifikation von Zeitreihen auf Basis von inhärenten Eigenschaften und Merkmalen in einem festgelegten Zeitraum. Die Merkmale können für gleiche Zeitintervalle aber zu unterschiedlichen Zeitpunkten analysiert werden. Gibt es zueinander ähnliche Zeitintervalle, dann können diese zu einer Gruppe zusammengefasst und schlussendlich vom Domäne-Experten 22 als Charakteristik gekennzeichnet werden.

Ein weiteres beispielhaftes Klassifikationsverfahren ist eine Klassifikation von Log Daten mithilfe von Text- oder Dokument-Clustering. Im Gegensatz zu den Zeitreihen handelt es sich hier um nicht-zyklische Daten und in den meisten Fällen auch um eine Kombination aus Text und numerischen Daten.

Für die oben beschriebene Stromnetzausführung wird ein Netzsegment eines Smart Grids wird durch eine Batterie gestützt, um Überlastungen zu vermeiden. Die Batterie wird zusätzlich auch für eine öffentliche Ladestation genützt, um dort bei starker Benutzung eine hohe Ladeleistung sicherzustellen. Die zu optimierenden KPIs wären hier etwa eine hohe Erfolgsquote bei der Vermeidung von Überlastungen sowie bei der Erfüllung der angefragten Ladeleistung, geringe anfallende Kosten (Anschaffungskosten sowie Betriebskosten) oder die Zufriedenheit der Kunden. Die Klassifikation könnte hier die einzelnen Tage in Gruppen einteilen, die Auskunft darüber geben, wie sich das Netzsegment an diesem Tag verhalten hat (z.B. Überlastung nur teilweise vermieden aber Ladeleistung vollständig erfüllt).

Da der Gesamtzustand von vielen verschiedenen Parametern beeinflusst wird und diese jeweils individuelle KPIs der Systemzustände und/oder des Gesamtzustand beeinflussen, kann es vorkommen, dass eine Optimierung eines KPIs durch Parametervariation eine Verbesserung eines anderen KPIs bewirken. Daher wird das Verfahren, insbesondere die Verfahrensschritte e) und f), bevorzugt nicht nur für einen einzelnen Systemzustand durchgeführt, sondern es wird für eine Vielzahl von Systemzuständen, insbesondere für alle von dem Gesamtzustand umfassten Systemzustände, derselbe Parameter(satz) variiert und somit eine Gesamtoptimierung erzielt. So kann ausgeschlossen werden, dass ein variierter Parameter einen ersten, zuvor als unvorteilhaft bewerteten Systemzustand positiv und einen weiteren Systemzustand negativ beeinflusst.

Die Veränderung des Parameters Batteriegröße kann einen ersten individuellen KPI Ausfallsicherheit eines einzelnen System- bzw. Gesamtzustands positiv beeinflussen (größere Batterie führt zu höherer Ausfallsicherheit), den weiteren individuellen KPI Kosten der Komponenten negativ beeinflussen (größere Batterie führt zu höheren Kosten da die Systemkomponente Batterie teurer wird). Durch einen menschlichen Beurteiler oder nach einer Vorschrift kann ein Ausschluss bestimmter Systemzustände des Gesamtzustands oder einzelner Gesamtzustände erfolgen, selbst wenn der Großteil der individuellen KPIs sehr positiv ist. Dies kann einfach erfolgen, indem beispielsweise diese unerwünschten Systemzustände mit einem sehr schlechtem KPI beurteilt werden. Andererseits kann es auch Fälle geben, in denen der KPI des Gesamtzustands mehrere unterschiedliche qualitative (subjektive, nicht trivial quantifizierbare; z.B. Kundenzufriedenheit) oder auch quantitative, aber nicht in jedem einzelnen Systemzustand gemessene Größen (z.B. Gesamtkosten der bezogenen Leistung) abbildet. Die Gewichtung dieser Einflüsse auf den KPI des Gesamtzustands muss daher einen Kompromiss finden.

Um einen guten Kompromiss zu finden, wird daher gemäß einer Ausführungsform der KPI des Gesamtzustands ermittelt 108, der Gesamtzustand bewertet 100 und anschließend wird ein Parameter oder ein Parametersatz variiert 110 und mit diesem Parameter(satz) Messdaten simuliert 112. Für die Simulation der Messdaten werden (zumindest sofern kein Zusammenhang zwischen den variierten und nicht-variierten Parametern bekannt ist) die nicht variierten Parameter als unverändert angenommen. Der Experte 22 führt die KPI-Analyse durch, indem er die vom Klassifikator klassifizierten Klassen und somit die Systemzustände bewertet. Die Simulation muss dabei zumindest einen Teil des Gesamt-Systems abdecken, der durch die Parameter beeinflusst wird. Eine genau Simulation des Gesamtsystem mit allen Zusammenhängen ist dabei nicht erforderlich.

Mit diesen simulierten Messdaten wird das Verfahren dann iterativ durchgeführt 114. Diese simulierten Messdaten werden anschließend denselben Verfahrensschritten unterworfen, denen zuvor die realen Messdaten 106, 108, 110, 112 unterworfen worden, wobei das Verfahren iterativ so lange durchgeführt wird, bis ein optimierter Gesamtzustand, abgebildet durch zufriedenstellende KPI des Gesamtzustands, erreicht wird 114. Es kann auch für die simulierten Messdaten nicht der zuvor für die realen Messdaten ausgewählte Klassifikator verwendet, sondern ein neuer, u.U. leicht oder komplett angepasster Klassifikator ausgewählt werden 104.

Das reale CPS kann mit den virtuell erhaltenen variierten Parametern betrieben werden 116 und das erfindungsgemäße Verfahren 102, (evtl. 104 - wie weiter oben beschrieben) 106, 108, 100, 110, 112, evtl. 114 erneut durchgeführt werden.

Die KPI Analyse überwacht das reale CPS und berechnet auf Basis der Echtzeit-Daten (Messwerte) und des Klassifikators die aktuellen KPIs des CPS. Dies kann beispielsweise so erfolgen, dass das prozentuale Auftreten der unterschiedlichen Klassen innerhalb eines untersuchten Zeitraums ermittelt und als KPI herangezogen wird.

Dazu können nach dem Klassifizieren etwa einzelne Klassen als optimal, suboptimal oder unerwünscht bewertet werden 108. Je öfters sich das CPS in einer als optimal gekennzeichneten Klasse befindet, desto besser ist der zugehörige KPI Wert. Neben den aus der Klassifikation berechneten KPIs können auch weitere KPIs aus den Messdaten erstellt werden. Beispiele sind hier etwa anfallende Kosten oder Energieeffizienz. Ein Domain-Experte 22 kann dabei die ermittelten System-KPIs überwachen und kann basierend auf seiner Bewertung den Klassifikator optimieren 104s.

In dem oben beschrieben Netzsegment können mehrere Tage analysiert werden und als KPI wird ermittelt, wie oft sich das Verhalten im gewünschten Zustand "Überlast 100% vermieden und angefragte Ladeleistungen immer erfüllt" befindet. Zusätzliche KPIs könnten die Kosten der Batterie sein, welche auch direkt mit der potenziellen Kapazität der Batterie korrelieren.

Bei der Bewertung 100 kann eine unterschiedliche Gewichtung der ermittelten KPIs auf einfache Weise vom Experten vorgegeben werden. Dies beispielsweise, in dem ein Gesamtzustand, bei dem in nur einem Systemzustand Überlast, ein besonders unvorteilhafter Systemzustand eines Stromnetzes, auftrat, als suboptimal bewertet wird, selbst wenn sämtliche anderen ermittelten KPIs optimal sind.

Dann wird eine Optimierung des Gesamtzustands angestrebt. Die Optimierer-Komponente nützt die ermittelten KPIs, um ein (möglichst) optimales Parameterset für die Parametrisierung des CPS zu berechnen. Zusätzlich zu den initialen KPIs aus dem realen CPS werden mithilfe einer Simulation (siehe Verfahrensschritt 112) auf Basis des Wissens über das CPS (Topologie, Modelle von Teilsystemen oder Messdaten) und dem vom Optimierer berechneten Parameterset neue generische Messdaten erzeugt/simuliert. Diese simulierten Messdaten werden nun erneut mithilfe des in Schritt 104 entwickelten Klassifikator klassifiziert 106 und es erfolgt eine neuerliche Auswertung der KPIs 108. Die dabei entstanden simulierten KPIs können nun mithilfe des Optimierers erneut dazu genützt werden, ein möglichst optimales Parameterset zu ermitteln. Um es nun dem Optimierer zu ermöglichen, sich in diesem Parameter-Raum in eine optimale Richtung zu bewegen, ist es notwendig dieses Verfahren iterativ auszuführen.

Die dabei entstehende Information über die Änderung der KPIs gibt dem Optimierer die Möglichkeit die Systemparameter Schritt für Schritt so zu ändern, dass die gewählten KPIs maximiert oder minimiert werden.

Mögliche Verfahren, um solch ein iterativ lernendes System für das Auffinden eines optimales Parameterset zu implementieren wären: rasterbasierte Methoden, zufallsbasierte Methoden (z.B. Monte Carlo Simulation), Gradienten-basierte Methoden (Stochastic Gradient Descent), evolutionäre/genetische Algorithmen, Reinforcement Learning Methoden, .... Ist ein stabiles Optimum erreicht bzw. erfüllt das ermittelte Parameterset die geforderten Ansprüche, so ist der virtuelle Teil des Verfahrens (Schritte 102-114) erfolgreich abgeschlossen. Die ermittelten Parameter können nun verwendet werden, um das reale CPS zu optimieren 116. In weiterer Folge kann das CPS dennoch kontinuierlich weiterüberwacht werden, um einerseits die reale Auswirkung der ermittelten Parameter zu verifizieren und andererseits auch um auf mögliche zukünftige Verhaltensänderungen des CPS (welche z.B. zu einem anderen optimalen Parameterset führen) eingehen zu können. Wenn kein ausreichend optimales Parameterset ermittelt werden kann oder deren Auswirkung auf das reale CPS nicht wie gewünscht ist, so kann entweder die Algorithmik des Optimierers oder des Klassifikators (Eingreifen durch Experten 22 oder Computer 24 in den Schritt 104) bzw. die KPI Analyse 108 durch den Domain-Experten 22 (oder Computer 24) angepasst werden. Wenn unerwarteterweise einmal gar keine Konvergenz erzielt werden kann, kann auch der Experte 22 eine Festsetzung eines oder mehrerer Parameter bestimmen.

Für die oben beschriebene Stromnetzausführung könnte der Optimierer wie folgt aussehen: Die zu variierenden Parameter 110 könnten Batteriegröße, Ladestrategie der Batterie oder der Autos, sowie Schwellwerte für die Anfrage von Ladeleistungen der Ladestation sein (z.B. bis zu welchem unteren Batterieladestand Anfragen der Ladestation erlaubt werden). Das optimal berechnete Parameterset wird nun mit einem Optimierungsverfahren, z.B. einem der oben genannten, berechnet. Idealerweise sollte dies (sofern der Optimierer ein gutes Ergebnis liefert) ein Parameterset liefern, welches Überlasten vollständig vermeidet, Ladeleistungs-Anfragen immer genehmigt und gleichzeitig mit der geringstmöglichen Batteriekapazität die anfallenden Kosten minimiert.

Basis der Simulation 112 ist ein Simulationstool, welches das heterogene CPS ausreichend genau modellieren kann, ohne dabei aber eine formale Beschreibung aller Parameterzusammenhänge zu benötigen. Dazu können entweder Daten von dem realen CPS (Topologie, Messdaten, etc.) für eine automatisierte Erstellung eines Models verwenden werden oder aber auch auf vorhandene (Teil-)Modelle oder auf Domain-Expertenwissen (das auch modellierbar sein kann, z.B. kann das Autoladeverhalten modelliert werden) zurückgegriffen werden. Die Simulation wird nun immer von der Optimierer-Komponente angestoßen, sobald diese ein neues zu evaluierendes Parameterset ermittelt hat. Das CPS wird nun unter Verwendung dieser Parameter simuliert und die simulierten Messdaten werden an die KPI Analyse (108) weitergegeben. Dort erfolgt eine erneute Analyse, welche wiederum vom Optimierer- als neuer Input verwendet wird. Somit entsteht ein geschlossener Kreislauf 106, 108, 110, 112, 114, welcher es dem Optimierer erlaubt, mittels der Simulation 112 einen möglichst optimalen Parametersatz zu berechnen.

Die Simulation kann gemäß einer Ausführungsform als Blackbox Ansatz ausgeführt werden: Das CPS wird als Blackbox angenommen und auf Basis von ausreichend vielen Messdaten aus dem realen CPS wird ein Model für die Simulationsumgebung erstellt. Die unbekannten Parameterzusammenhänge werden damit indirekt von der Simulation erlernt aber können nicht explizit aus dem Modell abgeleitet werden. Andere Parameterzusammenhänge, die einem Experten 22 bekannt sind, können auch als Benutzerinput eingegeben werden.

Die Simulation kann gemäß einer weiteren Ausführungsform physikalische Modelle heranziehen: Die Simulationsumgebung kann physikalische Teilkomponenten des CPS und deren Interaktion simulieren. Es werden also keine abstrakten (Blackbox) Modelle erstellt, sondern physikalische Zusammenhänge bzw. deren Ursachen (root-causes) modelliert. Durch eine intelligente Wahl der Teilmodelle bzw. Festlegung von deren Detailgrads (wie detailliert bzw. bis zu welcher Abstraktionsebene die physikalischen Zusammenhänge modelliert werden) kann eine realistische Simulation des CPS erstellt werden, welche ohne direktes, vollständiges Wissen über die Parameterzusammenhänge diese dennoch ausreichend korrekt wiedergibt.

Auch eine Kombination ist möglich: so können die Messdaten unbekannter Parameterzusammenhänge mit dem Blackbox-Ansatz und die Messdaten bekannter Parameterzusammenhänge mit einem physikalischen Modell simuliert werden. Für unterschiedliche Parametertypen können unterschiedliche Simulationsansätze herangezogen werden.

Allgemein gesprochen stellt die Simulationsumgebung eine Möglichkeit dar, die Auswirkung von Parameteränderungen zu analysieren, ohne deren Zusammenhänge vollständig zu kennen. Ein weiterer wichtiger Vorteil des Simulationsschritts besteht auch darin, dass die Auswirkung von neuen Parameterwerten getestet werden kann, ohne in das reale CPS eingreifen zu müssen. So kann der Optimierer gefahrlos lernen, ohne dass die Gefahr einer Beschädigung des realen CPS besteht. Ziel der Simulation ist nicht eine exakte Abbildung der Realität, das Simulationsergebnis muss einfach gut genug sein, um die durch Parametervariation bedingten Änderungen ausreichend exakt zu beschreiben.

So kann bei einem Stromnetz ein heterogenes Smart-Grid-Simulationstool verwendet werden, welches Haushalte durch variable Standardlasten simuliert, ein physikalisches Modell einer Batterie verwendet, sowie zufällige bzw. auf Statistiken beruhende Ladevorgänge an Ladestationen durch die Simulation von realistischen Ladekurven nachstellt. Auch die Regel-/Automatisierungsstrategien des Szenarios (z.B. die Regelstrategie des Überlastungsschutzes) müssen in die Simulationsumgebung integriert werden. Weitere heterogene Einflüsse wie z.B. die Simulation von Photovoltaik-Anlagen basierend auf Wetterdaten ermöglichen eine heterogene Simulationsumgebung. Das Parameterset beinhaltet in diesem Szenario beispielsweise die Grenzwerte, unter bzw. über welcher die Batterie die Ladeanfragen erfüllt, in welchem Ausmaß diese Anfragen erfüllt werden (Regelstrategie), die Größe der Batterie oder die Bedingungen, unter welchen die Batterie unterstützten in das Netz eingreift. So kann die Auswirkung von Parameteränderungen ohne Kenntnis von deren formalen Zusammenhängen analysiert werden, indem die zugrundeliegenden Zusammenhänge bzw. Ursachen (root-causes) - also etwa ein realistisches Modell einer Batterie - simuliert werden.

Betrachtet man derzeit vorhandene Systeme, die sich damit beschäftigen optimale Parameter für ein gewünschtes Verhalten in einem CPS System zu generieren bzw. zu lernen, dann stößt man in den meisten Fällen auf das Problem, dass eine formale Beschreibung des gewünschten Zustands notwendig ist. Dies setzt zum einen ein detailliertes Wissen über die Domäne, genaue Modelle und viel Expertenwissen voraus. Einer der größten Nachteile dabei ist aber, dass in den meisten Fällen und vor allem bei solch komplexen Systemen wie einem CPS kein direktes Wissen über alle auftretenden Systemzustände vorliegt bzw. manche Zustände nicht abbildbar bzw. modellierbar sind.

Verfolgt man jedoch den in oben beschriebenen Ansatz, die aktuell im System vorherrschenden Zustände auf Basis von historischen Messdaten zu extrahieren, dann ermöglicht man damit dem Domäne-Experten 22 alle auftretenden Systemzustände zu erkennen. In einem weiteren Schritt kann ein Experte 22 oder ein Expertensystem 24 diese Zustände als optimal, suboptimal oder nicht erwünscht klassifizieren. Es handelt sich daher um einen Ansatz, der keine formale Beschreibung von Systemzuständen und keine Annahmen über das CPS benötigt. Vielmehr beruht dieser Ansatz darauf das tatsächliche Systemverhalten zu repräsentieren.

Das Extrahieren und die darauffolgende Klassifikation der Systemzustände kann in einem weiteren Schritt dazu genützt werden um mithilfe der Einbindung einer heterogenen Simulationsumgebung optimale Parameter ohne Einbindung eines Nutzers 22 automatisiert zu lernen. Ein weiterer Vorteil der Nutzung einer heterogenen Simulationsumgebung ist der dadurch entstehende Schutz des realen Systems. Man kann sich vorstellen, dass die Wahl von ungeeigneten Systemparametern in CPS zu einem instabilen, nicht erlaubten oder sogar System-zerstörenden Zuständen führen kann. Dies kann mithilfe der Simulation vermieden werden. Ebenfalls von Vorteil ist, dass man je nach Wahl des Verfahrens für die Optimierung auch Information darüber extrahieren kann, welche Systemparameter ein nicht erlaubtes Verhalten, welches als unerwünschter Systemzustand bewertet wird 100, erzeugen würden. Diese Parameter können folglich im realen CPS verboten bzw. als nicht zulässig deklariert werden.

Das erfindungsgemäße Verfahren zur Optimierung des Gesamtzustands des CPS ist ein computerimplementiertes Verfahren. Der Gesamtzustand umfasst einzelne Systemzustände, die über Messdaten abbildbar sind und über Parameter beeinflussbar sind. Der Systemzustand eines bestimmten Zeitpunkts oder Zeitraums bezeichnet die Gesamtheit aller Informationen, die zur vollständigen Beschreibung der momentanen messbaren Eigenschaften des Systems erforderlich sind. Die Parameterzusammenhänge bzw. der Einfluss einer Parameteränderung auf die Messwerte des Systemzustands sind nicht vollständig nachvollziehbar und somit als unbekannt oder nur teilweise bekannt anzusehen.

Zumindest einige der Parameter (Stellgrößen) sind direkt beeinflussbar über die Wahl von Systemkomponenten und deren Verhalten (z.B. Batteriegröße, Lade-/Entladesteuerung z.B. nutzer- oder systemvorgegebene Batterieladegeschwindigkeit, Anzahl, Ausgestaltung und Ausrichtung Photovoltaikanlagen, Anzahl Ladesäulen, Ladestromstärke Ladesäulen, Kontrollalgorithmus und dessen Kontrollparameter, Batterieladegeschwindigkeit, ...). Die Batteriegröße ist ein statischer Parameter, der nicht im laufenden Betrieb des CPS steuerbar ist, jedoch durch Wahl der Batteriespezifikationen einstellbar ist. Dynamische Parameter können während des laufenden Betriebs verändert werden, z.B. Kontrollparameter wie z.B. maximaler Ladestrom einer Ladesäule. Andere Parameter sind auch beeinflussbar, jedoch in geringerem Umfang (z.B. Nutzungsverhalten steuerbar über Hoch-/Niedertarife, unterschiedliche Preise für langsame und schnelle Elektroauto-Ladestation, ...). Weitere Parameter sind gar nicht steuerbar (z.B. Wetter, ...). Einige Parameter können zwar festlegbar sein, aber sind dennoch extern vorgegeben und somit als statisch anzusehen, z.B. Schwellwerte für den Überlastungsschutz.

Das Auswählen eines Klassifikators ist das Generieren (durch künstliche Intelligenz 24, einfachen Algorithmus 24 oder einen Experten 22) einer bestimmten Vorschrift, um Ähnlichkeiten in den Messdaten der Systemzustände zu finden, d.h. die Messdaten der Systemzustände werden bestimmten Kategorien zugeordnet. Die Klassifizierung ist allgemein ein Zusammenfassen von Objekten zu Klassen (Gruppen, Mengen, Kategorien), welche zusammen eine Klassifikation bilden. Der Klassifikator erkennt bestimmte Merkmale und Muster innerhalb des Datensatzes und versucht, Gemeinsamkeiten und Unterschiede zu finden, um eine entsprechende Einordnung vorzunehmen. Vor der Klassifizierung ist nicht notwendigerweise bekannt, welche Gemeinsamkeiten dies sein werden. So können auch unerwartete Effekte einer Parameterveränderung erkannt werden.

Für KPI-Analyse können unterschiedliche Arten von KPIs herangezogen und analysiert werden. Einerseits einfach messbare individuelle KPIs der von dem Gesamtzustand umfassten Systemzustände, wobei diese individuellen KPIs einfache Messdaten oder aus diesen ermittelbar sein können. KPIs können basieren auf einer Klassifizierung der Klassen der Systemzustände, wobei hier auch ein Labeln der Güte der Klassen miteinfliessen kann (viele als optimal gelabelte Klassen sind ein wünschenswerter KPI). Zudem kann in den KPI des Gesamtzustands eine messbare Größe eines Systemzustands (z.B. bereits erfasster Messwert ohne weitere Berücksichtigung einer Klassifizierung) und/oder des Gesamtzustands (z.B. die gesamthaft abgerechneten Kosten, ermittelt aus der bezogenen Stromleistung und/oder Strafzahlungen wegen Stromspitzen o.ä.) einfliessen. Die einzelnen KPIs können separat analysiert werden oder es wird nur oder zusätzlich die Güte des Gesamtzustands gelabelt und dies als KPI herangezogen.

Das Variieren der Parameter kann erfolgen für alle oder nur für einige Systemzustände, wobei eine Parametervariation insbesondere für Systemzustände mit einer zugeordneten geringen Klassen-Güte anzuraten ist. Aber da die Variation eines Parameters auch zuvor optimale Systemzustände beeinflusst, empfiehlt sich ein Parametervariieren und eine Simulation der Messdaten mit diesem variierten Parameter für alle Systemzustände des Gesamtzustands, und nicht nur für die zuvor als suboptimal bewerteten Systemzustände.

Nachdem der Einfluss einer Parametervariation auf den Gesamtzustand des CPS simuliert wurde, ist das Betreiben des realen CPS mit den variierten Parametern, also ein Überprüfen an dem realen CPS eine gute Überprüfung. Wenn die Simulation die Realität doch nicht korrekt genug abgebildet hat, werden beim Betreiben des CPS mit den optimierten, variierten Parametern von den simulierten Messdaten (=Simulationsdaten) signifikant bzw. stark abweichende Messwerte erhalten (was eine starke und was eine gerade noch akzeptable Abweichung ist, liegt im Ermessensspielraum). Um eine geringere Abweichung zu erzielen, muss das Verfahren verbessert werden, z.B. durch supervised und/oder unsupervised Anpassen des Klassifikators und/oder durch supervised und/oder unsupervised Anpassen des Auswählens des Klassifikators (indem die Klassifizierung als supervised oder unsupervised Clustering durchgeführt wird) und/oder durch supervised und/oder unsupervised Anpassen eines Vorgehens des Simulierens von Messdaten (z.B. Anpassen/Ändern des Simulationsmodells, wenn beim Betreiben des CPS mit den variierten Parametern die realen Messwerte stark von den simulierten Messwerten abweichen, so dass sich das Simulationsmodell als suboptimal herausgestellt hat) und/oder durch supervised und/oder unsupervised Anpassen eines Ermittelns des Key-Performance-Indikators des Gesamtzustands (z.B. durch unterschiedliche Gewichtung der einzelnen Faktoren bei der KPI-Bestimmung des Gesamtzustands) und/oder durch supervised und/oder unsupervised Anpassen des zuvor variierten Parameters zu jedem Zeitpunkt hinsichtlich einer Durchführung des Verfahrens. Somit können die Schritte der Verfahrensverbesserung supervised oder unsupervised oder kombiniert supervised und unsupervised durchgeführt werden. Die Anpassung/Optimierung des Klassifikators im laufenden Betrieb kann mittels Machine Learning, einen einfachen Algorithmus und/oder durch einen menschlichen Experten erfolgen.

Diese Verbesserungsversuche sind auch dann sinnvoll, wenn nach iterativer Verfahrensdurchführung ein nicht-zufriedenstellender KPI des Gesamtzustands erhalten wurde und/oder keine stabilen Grenzwerte (Minima/Maxima) bei der Parameteroptimierung erhalten worden sind.

Beim Labeln der Klassen mit einer Güte (z.B. gemäß einer Gütekategorie wie optimal, suboptimal, unerwünscht) werden diese einer Gütekategorie zugeordnet, wobei die gelabelte Klassen-Güte der Systemzustände (dieses Labeln erfolgte zuvor) den Key-Performance-Indikator des Gesamtzustands beeinflusst und somit auf der zuvor durchgeführten Klassifizierung der Klassen der Systemzustände basiert. Dieses Labeln der Klassen mit einer Güte stellt eine Bewertung dar, die rein subjektiv sein kann oder nach gewissen Kriterien erfolgen kann.

### Bezugszeichenliste

- 22: Experte
- 24: Computer (Künstliche Intelligenz z.B. Machine Learning; Algorithmus; ...)
- 100: Bewertung
- 102: Erfassen Messdaten (Verfahrensschritt a)
- 104: Auswählen Klassifikator (Verfahrensschritt b)
- 104s: supervised
- 104u: unsupervised
- 106: Klassifizierung (Verfahrensschritt c)
- 108: Ermitteln KPI (Verfahrensschritt d)
- 110: Parametervariation (1. Teil Verfahrensschritt e)
- 112: Simulieren Messdaten (2. Teil Verfahrensschritt e)
- 114: iterative Durchführung (Verfahrensschritt f)
- 116: Betreiben des CPS mit dem variierten Parameter (Verfahrensschritt g)

## Patentansprüche

1. Verfahren zur Optimierung eines Gesamtzustands eines cyber-physischen Systems (Cyber-Physical System, CPS), umfassend ein physisches System mit miteinander agierenden physikalischen und digitalen Systemkomponenten, insbesondere ein Smart Grid, wobei die Systemkomponenten über eine Dateninfrastruktur kommunizieren, ein Systemzustand des cyber-physischen Systems mit Messdaten abbildbar und über Parameter beeinflussbar ist und der Gesamtzustand mindestens einen Systemzustand umfasst;
umfassend die Verfahrensschritte:
a) für mehr als einen Systemzustand Erfassen von Messdaten des cyber-physischen Systems (102);
b) Auswählen von einem oder mehreren Klassifikatoren (104);
c) Klassifizierung der Systemzustände basierend auf den erfassten Messdaten in Klassen durch den oder die Klassifikatoren (106);
d) für den Gesamtzustand Ermitteln von mindestens einem Key-Performance-Indikator (KPI) (108) wobei der Key-Performance-Indikator des Gesamtzustands beeinflusst wird von
- einem individuellen Key-Performance-Indikator eines von dem Gesamtzustand umfassten Systemzustands und/oder
- der Klassifizierung der Klassen der Systemzustände und/oder
- einem Labeln einer Güte des Gesamtzustands und/oder
- einer messbaren Größe eines Systemzustands und/oder des Gesamtzustands ;
e) für mindestens einen erfassten Systemzustand, Variieren von mindestens einem Parameter (110) und Simulieren von Messdaten (112) ausgehend von diesem Systemzustand mit diesem variierten Parameter;
f) erneute Durchführung der Verfahrensschritte c) bis e) mit den simulierten Messdaten (114) so lange bis die mit dem variierten Parameter erhaltenen Key-Performance-Indikatoren des Gesamtzustands zufriedenstellend sind.

2. Verfahren nach Anspruch 1, zudem umfassend den Verfahrensschritt
g) Betreiben des cyber-physischen Systems mit dem im Verfahrensschritt f) erhaltenen variierten Parameter (116) und erneute Durchführung der Verfahrensschritte a) bis f).

3. Verfahren nach einem der vorangehenden Ansprüche, zudem umfassend den Verfahrensschritt
h) Labeln der Klassen mit einer Güte; wobei die gelabelte Klassen-Güte der Systemzustände den Key-Performance-Indikator des Gesamtzustands beeinflusst.

4. Verfahren nach einem der vorangehenden Ansprüche, zudem umfassend den Verfahrensschritt
supervised und/oder unsupervised Anpassen des Klassifikators und/oder des Auswählens des Klassifikators und/oder eines Vorgehens des Simulierens von Messdaten und/oder eines Ermittelns des Key-Performance-Indikators des Gesamtzustands und/oder des zuvor variierten Parameters zu jedem Zeitpunkt hinsichtlich einer Durchführung des Verfahrens.

5. Verfahren nach Anspruch 4, **gekennzeichnet durch** eine Durchführung des Verfahrensschritts nach Anspruch 4 wenn im Verfahrensschritt f) nur ein nicht-zufriedenstellender Key-Performance-Indikator des Gesamtzustands erhalten wird und/oder wenn die nach Durchführung des Verfahrensschritts g) erhaltenen Messdaten des realen cyber-physischen Systems von den simulierten Messdaten signifikant abweichen.

6. Verfahren nach einem der vorangehenden Ansprüche, **dadurch gekennzeichnet, dass**
das Simulieren der Messdaten Wissen über das gesamte oder nur Teilbereiche des cyber-physikalische Systems und/oder Benutzereingaben berücksichtigt und/oder erfolgt mittels Machine Learning basierend auf ausreichend vielen Messdaten des realen cyber-physischen Systems.

7. Verfahren nach einem der vorangehenden Ansprüche, **dadurch gekennzeichnet, dass**
die Simulation mit einem Simulationsmodell durchgeführt wird, wobei eine Auswahl des Simulationsmodells in Abhängigkeit von dem variierten Parameter erfolgt und das Simulationsmodell für unterschiedliche Parametertypen unterschiedlich sein kann.

8. Verfahren nach einem der vorangehenden Ansprüche, **dadurch gekennzeichnet, dass**
der Key-Performance-Indikator berechenbar ist und/oder eine subjektive Bewertung umfasst.

9. Verfahren nach einem der vorangehenden Ansprüche, **gekennzeichnet durch**
synchrones Variieren unterschiedlicher Parametertypen eines Parametersets im Verfahrensschritt e).

10. Verfahren nach einem der vorangehenden Ansprüche, **gekennzeichnet durch**
Durchführen der Verfahrensschritte e) und f) für mehr als einen erfassten Systemzustand, insbesondere für alle von dem Gesamtzustand umfassten Systemzustände.

11. Verfahren nach einem der vorangehenden Ansprüche, **dadurch gekennzeichnet, dass**
der Parameter mit einer Systemkomponente verbunden ist und/oder ein externer Einflussfaktor ist, der nicht oder nur wenig steuerbar ist.

12. Vorrichtung zur Datenverarbeitung für eine Optimierung eines Gesamtzustands eines cyber-physischen Systems (Cyber-Physical System, CPS), umfassend ein physisches System mit miteinander agierenden physikalischen und digitalen Systemkomponenten, insbesondere ein Smart Grid, wobei die Systemkomponenten über eine Dateninfrastruktur kommunizieren, ein Systemzustand des cyber-physischen Systems mit Messdaten abbildbar und über Parameter beeinflussbar ist und der Gesamtzustand mindestens einen Systemzustand umfasst; umfassend Mittel zur Durchführung des Verfahrens nach Anspruch 1.

13. Vorrichtung nach Anspruch 13, **dadurch gekennzeichnet, dass**
die Vorrichtung ausgestaltet ist zur Durchführung des Verfahrens nach einem der Ansprüche 2 bis 11.

14. Cyber-physisches System umfassend ein physisches System mit miteinander agierenden physikalischen und digitalen Systemkomponenten, insbesondere ein Smart Grid, wobei die Systemkomponenten über eine Dateninfrastruktur kommunizieren, ein Systemzustand des cyber-physischen Systems mit Messdaten abbildbar und über Parameter beeinflussbar ist und der Gesamtzustand mindestens einen Systemzustand umfasst, wobei das cyber-physische System eine Vorrichtung nach Anspruch 12 oder 13 umfasst.

15. Computerprogramm umfassend Befehle, die bei der Ausführung durch eine mit dem cyber-physischen System nach Anspruch 14 verbundene Recheneinheit diese veranlassen, das Verfahren nach einem der Ansprüche 1 bis 11 auszuführen.
